# EUROPÄISCHE PATENTANMELDUNG

(11) **EP 3 001 544 A1**
(43) Veröffentlichungstag der Anmeldung: **30.03.2016**
(21) Anmeldenummer: 14186857.0
(22) Anmeldetag: 29.09.2014
(51) Int. Cl.: H02K 3/34, H02K 3/38, H02K 15/12

(54) **Aktivteil als Rotor oder Stator, ein Verfahren zur Herstellung eines solchen Aktivteils und eine elektrische Maschine**

(71) Anmelder: Siemens Aktiengesellschaft, 80333 München (DE)
(72) Erfinder: Grübel, André, 90768 Fürth (DE); Schirm, Dieter, 96149 Breitengüßbach (DE)

(57) **Zusammenfassung**

Die Erfindung betrifft ein Aktivteil (1, 2) einer elektrischen Maschine, beispielsweise einen Rotor (1) oder einen Stator (2), sowie eine elektrische Maschine mit einem solchen Aktivteil (1, 2). Das Aktivteil (1, 2) weist einen Grundkörper (1a, 2a) und eine Wicklung (3) auf, wobei die Wicklung (3) von einer Vergussmasse (5, 5') umschlossen ist, wobei die Vergussmasse (5, 5') mindestens drei Bereiche (9a, 9b, 9c) aufweist, wobei die Wicklung (3) in einem ersten Bereich (9a) in einer Nut (7) durch den Grundkörper (1a, 2a) verläuft, wobei die, von der Vergussmasse (5, 5') umschlossene Wicklung (3) zumindest in einem dritten Bereich (9c) aus dem Grundkörper (1a, 2a) hinausragt. Das Aktivteil (1, 2) ist zumindest ein zweiter Bereich (9b) zwischen dem ersten Bereich (9a) und dem dritten Bereich (9c) vorgesehen, wobei die Vergussmasse (5, 5') in dem zweiten Bereich (9b) eine andere Zusammensetzung als in dem ersten Bereich (9a) bzw. dem dritten Bereich (9c) aufweist.

## Beschreibung

Die Erfindung betrifft einen Aktivteil einer elektrischen Maschine, insbesondere einen Stator und einen Rotor. Weiter betrifft die Erfindung ein Verfahren zur Herstellung eines solchen Aktivteils. Weiter betrifft die Erfindung eine elektrische Maschine mit einem solchen Aktivteil.

Zur einfachen Isolation von spannungsführenden Leitern, auch Wicklungen genannt, in einem Rotor oder einem Stator werden die Leiter nach Einbringen in den Stator und/oder Rotor mit einem Harz (Vergussmasse) vergossen. Die Wicklungen werden dabei in ein Blechpaket (Grundkörper) eingebracht.

Solche vergossenen Statoren werden beispielsweise in DE 10 2008 003 784 A1 beschrieben. Dort wird beschrieben, wie eine fließfähige Vergussmasse zur Herstellung eines solchen Stators eingesetzt wird.

Weiter beschreibt die DE 197 15 920 A1 ein Verfahren zum Bilden eines Statoraufbaus, wobei die Statorwicklungen nach der Positionierung mit einem Epoxydharz getränkt werden.

EP 2 113 991 A1 beschreibt einen vergossenen Stator mit Wicklungen und ein Verfahren zur Herstellung eines solchen.

Der Erfindung liegt die Aufgabe zugrunde, ein Aktivteil mit verbesserten Eigenschaften zur Verfügung zu stellen.

Diese Aufgabe wird mit einem Aktivteil gemäß Patentanspruch 1 gelöst.

Die Aufgabe wird weiter mit einem Verfahren zur Herstellung eines solchen Aktivteils gemäß Anspruch 12 gelöst.

Die Aufgabe wird weiter durch einen Rotor gemäß Anspruch 13 sowie einem Stator gemäß Anspruch 14 gelöst.

Diese Aufgabe wird weiter durch eine elektrische Maschine, insbesondere eine dynamoelektrische Maschine, gemäß Anspruch 15 gelöst.

Weitere vorteilhafte Ausgestaltungen des Aktivteils, des Rotors oder der Stators sowie des Verfahrens werden in den abhängigen Ansprüchen beschrieben.

Unter einem Aktivteil wird ein Stator oder ein Rotor, insbesondere einer elektrischen Maschine verstanden. Ein Aktivteil kann jedoch auch ein Transformator (Spannungsumsetzer), eine Spule mit einem Grundkörper (Kern) sein. Allgemein ist ein Aktivteil einer elektrischen Maschine ein Teil, welches einen (aktiven) Beitrag zur Funktion der elektrischen Maschine liefert.

Unter einem Grundkörper wird beispielsweise ein Blechpaket verstanden. Ein Grundkörper kann auch ein massiv gefertigtes Bauteil wie ein Spulengrundkörper, ein aus Ferrit bestehender Körper, der Aussparungen / zumindest eine Nut, insbesondere für zumindest eine Wicklung, aufweist.

Unter einer Nut wird eine Aussparung in dem Grundkörper verstanden, wobei die Nut in der Regel auf der radial verlaufenden Oberfläche des Aktivteils verläuft. Die Nut in einem Grundkörper verläuft zwar meist in Rotationsrichtung des Grundkörpers beziehungsweise durch eine Symmetrieachse des Grundkörpers, es sind aber auch andere Verläufe denkbar. Eine Nut ist auch als Öffnung durch den Grundkörper, regelmäßig in Rotationsrichtung, hindurch denkbar.

Anstelle einer Wicklung kann auch ein Metallstab verstanden sein, wobei der Metallstab zur Induktion eines Magnetfeldes dient.

Unter einer Vergussmasse wird eine chemische Verbindung verstanden, die, insbesondere nach einem Prozess des Aushärtens, einen Feststoff bildet. Ein Aushärten kann ein chemisch ablaufender Prozess sein, der durch einen Härter und/oder durch Wärmeeinwirkung erfolgt. Eine unterschiedliche Zusammensetzung der Vergussmasse betrifft beispielsweise eine erhöhte Konzentration eines Flexibilisators oder eines Weichmachers. Eine unterschiedliche Zusammensetzung liegt auch bei der Verwendung unterschiedlicher Vergussmassen vor.

Unter einem ersten Bereich wird ein Bereich der Vergussmasse verstanden, der sich in einer Aussparung des Grundkörpers befindet. Bei einer Wicklung in einem Blechpaket werden Wicklungen meist in eine Nut (eine Aussparung) des Grundkörpers (Blechpaket) eingebracht.

Die Grenzen des ersten Bereichs müssen nicht zwangsläufig an den Enden der Nut verlaufen, sie können auch nach innen sowie ggf. nach außen verschoben sein. Gegebenenfalls ist in zumindest einer Richtung eine feste Grenze nicht angebbar.

Der **dritte Bereich** ist der Bereich der Vergussmasse, der den Teil der Wicklung umschließt, welcher außerhalb des Grundkörpers verläuft.

Im Falle eines Stators einer elektrischen Maschine weist die Vergussmasse zumindest zwei dritte Bereiche auf. Die dritten Bereiche erstrecken sich beispielsweise vom äußeren Ende der Vergussmasse auf der einen Seite und auf der anderen Seite bis zu einer Grenze, bei der die der Öffnung der Nut (Nutgrenze) am Grundkörper beabstandet verläuft.

Ein zweiter Bereich ist ein Bereich der Vergussmasse um die Wicklung herum, der im Bereich eines Endes der Nut im Grundkörper lokalisiert ist. Mit anderen Worten ist der zweite Bereich der Bereich der Vergussmasse, der nach innen und nach außen von der Nutgrenze beabstandet ist. Ein herkömmliches Aktivteil einer elektrischen Maschine weist regelmäßig zwei zweite Bereiche auf, die an den ersten Bereich angrenzen.

Dritte Bereiche sind insbesondere Bereiche der Vergussmasse, die in Bereichen der Enden der Wicklungen herum lokalisiert sind. Dritte Bereiche befinden sich in der Regel an den axial äußeren Rändern der Vergussmasse.

Der zweite Bereich kann zwischen dem ersten Bereich und dem dritten Bereich angeordnet sein. Der zweite Bereich kann auch umlaufend um die Stirnseite des Grundkörpers/Aktivteils verlaufen. Der zweite Bereich kann auch mit Teilen des ersten Bereichs und des dritten Bereichs überlappen. Der zweite Bereich grenzt in der Regel an den ersten Bereich und den dritten Bereich.

Mit anderen Worten ist ein Merkmal der Erfindung, dass in Bereichen, die hier als zweite Bereiche bezeichnet sind, welche besonderen Belastungen ausgesetzt sind, die Vergussmasse eine erhöhte Elastizität aufweist und dadurch mechanische Spannungen nicht wie bei einer spröden Vergussmasse zu nachteilhaften Effekten wie Bruch oder Rissen führt.

Eine mechanische Spannung tritt insbesondere durch thermische Einflüsse auf, wobei die mechanischen Spannungen im Normalfall zu unterschiedliche Ausdehnung der Wicklung, der Vergussmasse und/oder des Grundkörpers zurückzuführen sind. Weiter können auch aufgrund Betriebsbelastungen, insbesondere Vibration, Schwingungen, mechanische Spannungen auftreten.

Die besondere Belastung an den Grenzen der Nut, beziehungsweise nahe den Öffnungen des Aktivteils, wird durch die Wahl einer speziell dafür geeigneten Vergussmasse begegnet.

Wie nachfolgend geschildert, erhöht eine bereichsweise Verminderung des Elastizitätsmoduls bzw. die Zähigkeit der Vergussmasse die Haltbarkeit des Aktivteils.

Eine Veränderung der Zähigkeit der Vergussmasse kann bei einer amorphen Vergussmasse auch eine Erhöhung der Viskosität der Vergussmasse entsprechen.

Einsatzgebiete der Erfindung sind beispielsweise ein Stator und/oder ein Rotor einer elektrischen Maschine, ein Elektromagnet, ein Spannungswandler, ein Transformator. Besonders gut ist die Erfindung geeignet, um einen Rotor und/oder einen Stator mit zumindest einem Blechpaket und zumindest einer Wicklung, die in eine Vergussmasse integriert ist, an der Nutgrenze zu entlasten.

In einer vorteilhaften Ausgestaltung weist die Vergussmasse im zweiten Bereich einen verschiedenen Elastizitätsmodul als in dem ersten Bereich beziehungsweise dem dritten Bereich auf.

In einer weiteren vorteilhaften Ausgestaltung weist die Vergussmasse im zweiten Bereich eine verschiedene Zähigkeit als in dem ersten Bereich beziehungsweise dem dritten Bereich auf.

In der Regel ist die Zusammensetzung der Vergussmasse ein Mittel, um das Elastizitätsmodul / die Zähigkeit der Vergussmasse zu verändern. Das Elastizitätsmodul /die Zähigkeit (wie auch der Veiskosität) ist beispielsweise durch eine Beigabe eines Weichmachers oder eines Flexibilisators zu verändern. Durch den Einsatz eines Weichmachers wird die Zähigkeit der Vergussmasse in der Regel erhöht. Weiter kann ein zumindest teilweises Ersetzen einer Vergussmasse durch eine andere Vergussmasse (mit einem anderen Elastizitätsmodul / mit einer anderen Zähigkeit) das Elastizitätsmodul /die Zähigkeit der Vergussmasse verändern.

Eine erhöhte Zähigkeit der Vergussmasse setzt die Neigung zur Rissbildung herab.

Zur Veränderung der Zähigkeit und/oder dem Elastizitätsmodul der Vergussmasse kann auch eine Vergussmasse einer veränderten chemischen Zusammensetzung verwendet werden.

In einer Ausführungsform der Erfindung ist der zweite Bereich der Bereich, indem der Elastizitätsmodul der Vergussmasse vom Ende des ersten Bereichs ab erst sinkt und nahe einer Nutgrenze ein Minimum annimmt. Nach dem Minimum des Elastizitätsmoduls nimmt der Elastizitätsmodul der Vergussmasse gegebenenfalls wieder zu.

In einer weiteren vorteilhaften Ausgestaltung weist die Vergussmasse im zweiten Bereich ein verminderter Elastizitätsmodul (beziehungsweise eine erhöhte Zähigkeit) als die Vergussmassen im ersten Bereich bzw. im dritten Bereich auf.

Durch den Einsatz einer Vergussmasse mit einem verminderten Elastizitätsmodul bzw. einer erhöhten Zähigkeit ist in Bereichen, in denen mechanische Spannungen auf Grund von thermischer Ausdehnung das Aktivteil belastet, das Aktivteil widerstandsfähiger. Die mechanischen Spannungen entstehen durch unterschiedliche Ausdehnungskoeffizienten unterschiedlicher Materialien.

In einer weiteren vorteilhaften Ausgestaltung weist die Vergussmasse im ersten Bereich und im dritten Bereich den gleichen Elastizitätsmodul auf.

Die Verwendung der gleichen Vergussmasse für den ersten Bereich und den zumindest einen dritten Bereich vermindert die Produktionskosten, da nur zwei Vergussmassen zur Herstellung eines Aktivteils notwendig sind. Vorteilhaft ist auch die Verwendung einer Vergussmasse für alle Bereiche, wobei die Vergussmasse für den zweiten Bereich mit einem Zusatz versehen ist.

Bei einer weiteren bevorzugten Ausgestaltung ist die im zweiten Bereich befindliche Vergussmasse mit einem Flexibilisator in einer erhöhten Konzentration als in dem ersten Bereich und in dem zumindest einen dritten Bereich angereichert.

Ein Flexibilisator kann ein Reaktivverdünner, ein Weichmacher oder ein sonstiger Stoff sein, der die Flexibilität einer Vergussmasse erhöht bzw. den Elastizitätsmodul vermindert bzw. die Sprödigkeit herabsetzt. Eine unterschiedliche Konzentration eines solchen Flexibilisators in der Vergussmasse für den zweiten Bereich bewirkt vorteilhaft eine Herabsetzung des Elastizitätsmoduls der Vergussmasse. Daher wird vorteilhaft die Vergussmasse, die in dem zweiten Bereich vorliegt, mit einem Flexibilisator angereichert. Besonders vorteilhaft wird eine erhöhte Konzentration des Flexibilisators vor dem Aushärtungsprozess im Bereich der Nutgrenze in die Vergussmasse eingebracht. Während des Vorgangs des Aushärtens der Vergussmasse verteilt sich der Flexibilisator über den zweiten Bereich und bildet eine Gaußkurven-artige Verteilung in der Vergussmasse aus.

Bei Polyurethan werden z.B. Polyole als Flexibilisator eingesetzt. Der Weichmacher bzw. Flexibilisator dient dazu, die Flexibilität bzw. das Elastizitätsmodul der Vergussmasse zu verändern.

In einer weiteren vorteilhaften Ausgestaltung ragt die Wicklung auf zwei Seitenflächen des Grundkörpers heraus, wobei im Bereich der Seitenflächen ein zweiter Bereich den ersten Bereich umgibt.

Der erste Bereich umfasst in dieser Ausgestaltungsform die Vergussmasse innerhalb des Grundkörpers. Die zweiten Bereiche sind dann im Bereich der Nutgrenzen des Grundkörpers angeordnet. Die dritten Bereiche befinden sich in dem Bereich der Vergussmasse, indem die Wicklung außerhalb des Grundkörpers verläuft.

Die Seitenflächen, insbesondre des Grundkörpers, bezeichnen die Fläche des Grundkörpers, der die Aussparung bzw. Nut überdecken würde, falls die Aussparung (Nut) nicht in dem Grundkörper vorhanden wäre.

Vorteilhaft decken die beiden zweiten Bereiche jeweils 0,5 bis 5 Zentimeter lang die Vergussmasse um die jeweilige Nutgrenze ab.

Bei einer besonders bevorzugten Ausgestaltung des Aktivteils erstreckt sich der zweite Bereich um eine Öffnung des Grundkörpers, wobei die Wicklung aus der Öffnung des Grundkörpers herausragt.

Bei einer anderen vorteilhaften Ausgestaltung erstreckt sich der zweite Bereich um eine Öffnung der Aussparung auf der Oberfläche, durch welche die Wicklung aus dem Grundkörper austritt. Dabei verläuft der zweite Bereich entlang dem Verlauf der Wicklung, die durch die Vergussmasse umgeben ist.

Der zweite Bereich wird durch die Grenze der Nut, beziehungsweise durch das Aktivteil sowie durch die Außengrenze der Vergussmasse begrenzt. An Stirnseiten des zweiten Bereichs wird der zweite Bereich durch den ersten Bereich und den dritten Bereich begrenzt. Der Abstand der Stirnseiten beträgt je nach Größe des Aktivteils einige Millimeter bis einige Zentimeter.

Bei einer weiteren vorteilhaften Ausgestaltung weist die Vergussmasse im Bereich von Nutgrenzen des Grundkörpers herum eine unterschiedliche Zusammensetzung (der Vergussmasse) als innerhalb der Nut des Grundkörpers (erster Bereich) und/oder außerhalb des Grundkörpers (dritter Bereich) auf.

Wie vorstehend erläutert weist ein Aktivteil, insbesondere ein Stator oder ein Rotor einer elektrodynamischen Maschine, eine Wicklung auf. Die Wicklung ist meist in zumindest einer Nut des Grundkörpers lokalisiert. Die Wicklung durchläuft in der Regel bei elektrischen Maschinen zumindest zwei Nuten. Der Grundkörper kann ein Blechpaket sein. Die Wicklung ragt dabei an den beiden Seitenflächen aus dem Grundkörpers heraus. Die Wicklung verläuft dabei entlang der Rotationsachse des Aktivteils (insbesondere des Rotors) nahe der Tangentialflächen des Aktivteils. Die Nutgrenzen befinden sich jeweils an der Stelle, wo die Wicklung jeweils die Nut des Grundkörpers verlässt. Bis einige Millimeter oder Zentimeter (je nach Größe des Aktivteils) um die Nutgrenze in Rotationsrichtung erstreckt sich jeweils der zweite Bereich. An den jeweils zweiten Bereich schließt sich der dritte Bereich an. Der dritte Bereich verläuft in Rotationsrichtung bis zum Ende des Vergussmaterials.

Unter Zusammensetzung der Vergussmasse ist entweder der Anteil des Flexibilisators an der Vergussmasse oder die Art der Vergussmasse selbst gemeint. Die Zusammensetzung kann sich auch über die Bereichsgrenzen hinweg leicht verändern, beispielsweise durch Vermischung der Vergussmasse unterschiedlicher Zusammensetzung während des Vergießens.

In einer vorteilhaften Ausgestaltung weist die Vergussmasse ein Epoxidharz, einen Silikonvergussstoff, ein Polyurethanvergusstoff oder einen Kunststoff auf.

In einer besonders bevorzugten Ausgestaltung handelt es sich bei der Vergussmasse auf Epoxyd-, Silikon- oder Polyurethan-Bases.

Die Vergussmasse besteht zumindest zu einem großen Anteil aus einem Duroplast, welches nach dem Verguss ausgehärtet wird. Vergussmassen auf Epoxid-, Silikon- oder Polyurethanbasis eignen sich auf Grund ihrer guten Isolationsfähigkeit für das Vergießen der Wicklung des Aktivteils. Regelmäßig kann die Wärmeleitfähigkeit durch den Einsatz geeigneter Füllstoffe erhöht werden. Durch die Vergussmasse wird die Wicklung in der Nut fest positioniert und auch die einzelnen Leiter in ihrer Isolation zueinander und zu dem Grundkörper verbessert. Vorteilhaft sind die oben ausgeführten Vergussmassen durch Flexibilisatoren in ihren mechanischen Eigenschaften veränderbar.

Als Weichmacher bzw. als Flexibilisator dient bei Verwendung eines Epoxidharzes als Vergussmasse ein Reaktivverdünner. Als Reaktivverdünner werden niedrigviskose, mono-, bi- oder polyfunktionelle Monoere oder Oligomere, beispielsweise Poly-ethylenglykol oder aliphatische Glycidylether, eingesetzt.

Bei Polyurethan werden z.B. Polyole als Weichmacher eingesetzt. Der Weichmacher bzw. Flexibilisator dient dazu, die Flexibilität, das Elastizitätsmodul beziehungsweise die Zähigkeit der Vergussmasse zu verändern.

In einer weiteren vorteilhaften Ausgestaltung weist die Vergussmasse organische und/oder anorganische mikro- und/oder nanoskalige Füllstoffe auf.

Die Füllstoffe bzw. Partikel dienen vorteilhaft der Erhöhung der elektrischen Isolation der Wicklung, insbesondere in Bezug zu einem metallischen Grundkörper. Weiter können die Partikel zu einer verbesserten Wärmeleitfähigkeit des Vergussmaterials beitragen.

Als anorganisches Material eignen sich Metalloxide oder andere organische Oxide, insbesondere Glimmer oder Siliziumdioxid. Die Wicklung ist weiter vorteilhaft vor der Beaufschlagung mit der Vergussmasse mit einer weiteren isolierenden Schicht, beispielsweise einem Glimmerband, zu umgeben.

Denkbar ist weiter, dass die Vergussmasse im zweiten Bereich aus einem anderen Material als die Vergussmasse in dem ersten Bereich und/oder dem zumindest dritten Bereich besteht und dass die Vergussmasse anhand der anorganischen Partikel ausgewählt ist.

Beispielsweise kann im ersten Bereich ein Epoxidharz, bedarfsweise mit anorganischen Partikeln zur verbesserten elektrischen Isolierung beigemengt, im Dritten Bereich ebenfalls ein Epoxidharz (ohne anorganische Partikel) und in dem zweiten Bereichen ein anderes Harz einer verminderten Härte/Sprödigkeit oder erhöhten Elastizität verwendet werden. Es sind grundsätzlich die meisten Kombinationen von Vergussmassen möglich, wobei diese einander keine unvorhergesehenen chemischen Reaktionen eingehen oder keine nachteiligen Grenzflächen bilden.

Bei einer vorteilhaften Ausgestaltung ist der Grundkörper ein Blechpaket.

Ein Grundkörper einer elektrischen Maschine, die zumindest eine Wicklung aufweist, weist oft ein Blechpaket auf. Das Blechpaket dient zur Verminderung von unerwünschten Anteilen des magnetischen Feldes, das durch die (stromdurchflossene) Wicklung erzeugt wird.

In Bezug auf die erfindungsgemäße Ausgestaltung der Vergussmasse haftet eine oben ausgeführte Vergussmasse gut einem Blechpaket.

Eine Möglichkeit der Herstellung des Aktivteils erfolgt vorteilhaft dergestalt, dass eine Vergussmasse (5) durch Öffnungen in zumindest einer Nut in dem Aktivteil, insbesondere zwischen der Wicklung und einem Grundkörper, durchgeleitet wird, wobei die Zusammensetzung der Vergussmasse (5) während der Durchführung verändert wird.

In einer vorteilhaften Ausgestaltung des Verfahrens wird zuerst eine erste Vergussmasse durch die Öffnungen in dem Aktivteil durchgeführt. Danach zumindest eine weitere Vergussmasse durch die Öffnungen durchgeführt.

Ein solches Verfahren zum Verguss des Aktivteils, insbesondere der Wicklung, die in dem Grundkörper positioniert ist, hat zum Vorteil, dass sie sehr einfach durchzuführen ist und weiter mittels einfachen Werkzeugen/schon vorhandener Instrumente durchgeführt werden kann.

Im Folgenden wird die Erfindung anhand von Figuren weiter beschrieben und erläutert. Dabei werden in den einzelnen Ausführungsformen Merkmale offenbart, die der Fachmann auch einzeln realisieren oder in Kombination zu neuen Ausführungsformen zusammenfügen kann. Die gezeigten Ausführungsformen sind auf einen Stator und/oder einen Rotor bezogen. Der Fachmann kann diese Merkmale jedoch ohne weiteres auf andere oben aufgeführte Anwendungsgebiete übertragen, ohne den Rahmen der Erfindung zu verlassen.

Es zeigen:
- FIG 1: einen Ausschnitt eines Aktivteils in axialer Richtung,
- FIG 2: einen weiteren Ausschnitt eines Aktivteils in axialer Richtung,
- FIG 3: einen schematischen Aufbau eines Aktivteils und einen Verlauf einer Konzentration eines Flexibilisators,
- FIG 4: eine Vorrichtung zur Herstellung eines Aktivteils.

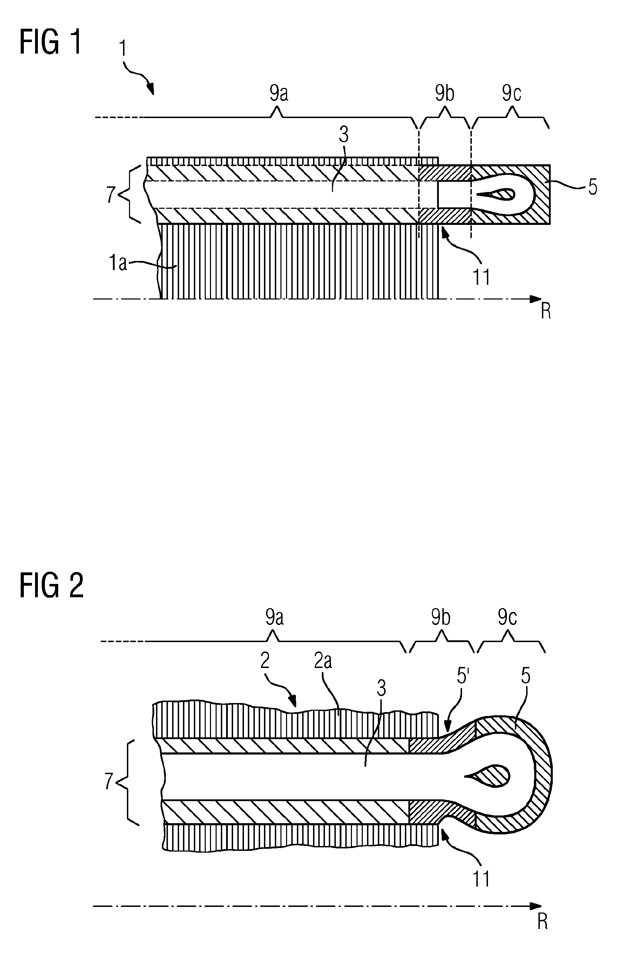

FIG 1 zeigt einen Ausschnitt eines Aktivteils 1, 2, insbesondere eines Rotors 1, in einer Schnittdarstellung. In dem Grundkörper 1a ist im oberen Bereich parallel zur Rotationsachse R in einer Nut 7 oder Aussparung eine Wicklung 3 integriert. Die Wicklung 3 füllt einen großen Teil der Nut 7 bzw. der Aussparung des Grundkörpers (1a) aus. Die Wicklung 3 ist sowohl in der Nut 7 als auch in dem über den Grundkörper 1a hinaus stehenden Abschnitts von einer Vergussmasse 5 umgeben. Die Vergussmasse 5 ist in den Bereich der Nut 7 oder der Aussparung des Grundkörpers 1a eingebracht worden. In Rotationsrichtung R ist die in der Vergussmasse 5 eingebettete Wicklung 3 in einen ersten Bereich 9a (im Inneren des Blechpakets 1a), in einen zweiten Bereich 9b im Bereich einer Seite des Blechpakets 1a und in einen dritten Bereich 9c (außerhalb des Blechpaket 1a) eingeteilt. Ein Rotor (als Aktivteil) 1 weist zumindest eine solche Wicklung 3 auf. Die Nut 7 ist zumindest so tief, dass die Wicklung durch die Vergussmasse 5 in radialer Richtung zur Rotationsachse R in der Nut 7 liegend fixiert ist. Vorteilhaft, jedoch nicht explizit dargestellt, kann in der Nut/Aussparung ein weiterer Kanal vorhanden sein. Dieser kann z.B. zur verbesserten Durchdringung der Wicklung 3 mit der Vergussmasse 5 beitragen. Als Grundkörper 1a ist hier ein Blechpaket 1a gezeigt.

FIG 2 zeigt einen weiteren Ausschnitt eines Aktivteils 1, 2 (Stator) in axialer Richtung. Die in die Vergussmasse 5 eingebettete Wicklung ist an der Unterseite des Blechpakets 2a gezeigt. Die in die Vergussmasse 5, 5' eingebettete Wicklung ist in drei Bereiche, einen ersten Bereich 9a, einen zweiten Bereich 9b und einen dritten Bereich 9c eingeteilt. Der erste Bereich 9a ist im inneren des Blechpaketes 2a lokalisiert. Der zweite Bereich 9b ist der Bereich, in welchem die Wicklung 3 aus dem Blechpaket 2a austritt. Der dritte Bereich 9c der in der Vergussmasse eingebetteten Wicklung 3 ist außerhalb des Blechpaktes 2a lokalisiert.

Die Vergussmasse 5' im zweiten Bereich 9b weist eine andere Zusammensetzung als die Vergussmasse 5 im ersten Bereich 9a und/oder im dritten Bereich 9c auf.

Die Vergussmasse 5', insbesondere im zweiten Bereich 9b, weist vorteilhaft ein geringeres Elastizitätsmodul EM auf als die Vergussmasse 5 im ersten Bereich 9a und ggf. auch ein anderes Elastizitätsmodul EM als die Vergussmasse 5 im dritten Bereich 9c auf.

Vorteilhaft kann die Vergussmasse 5, 5' weiter anorganische Partikel aufweisen, wobei die anorganische Partikel zur verbesserte Isolation der Wicklung 3 beitragen. Zur Einsparung von anorganischen Partikeln wie Glimmer, Metalloxide, oder ähnlichem kann nur die Vergussmasse 5' mit anorganischen Partikeln angereichert werden, der nahe der Nutgrenze 11 lokalisiert ist.

Bei einem Blechpaket 1a, 2a für einen Rotor 1 oder einen Stator 2 einer dynamoelektrische Maschine ragt die Wicklung 3, insbesondere die in eine Vergussmasse 5, 5' eingebettete Wicklung 3, auch auf der anderen Seite des Blechpakets 1a, 2a ebenfalls ein Stück weit heraus. Zur besseren Übersicht ist dies jedoch in den Ausschnitten der FIG 1 und FIG 2 nicht gezeigt.

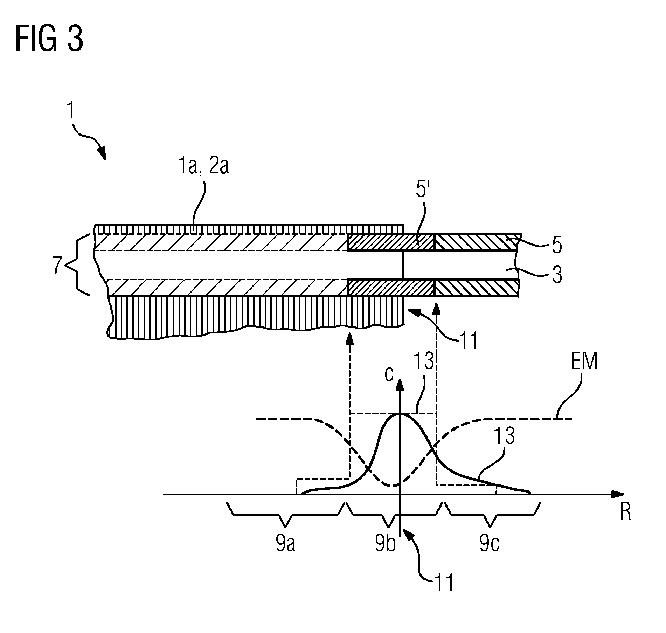

FIG 3 zeigt einen schematischen Aufbau eines Aktivteils 1, 2 und einen Verlauf einer Konzentration c eines Flexibilisators F. Der Flexibilisator F dient zur Verminderung der Sprödigkeit bzw. des Elastizitätsmoduls der Vergussmasse 5 im zweiten Bereich 9b. Oben ist der Schnitt des Teils des Aktivteils 1, 2 gezeigt. Im unteren Bereich der FIG 3 sind mögliche Konzentrationen c des Flexibilisators F und damit proportional verlaufende der (herabgesetzten) Zähigkeiten / der (herabgesetzten) Elastizitätsmodule 13 der Vergussmasse 5 als Funktion des Ortes in Rotationsrichtung R gezeigt. Die Ebene, durch welche die Wicklung 3 den Grundkörper 1a, 2a, des Aktivteils 1, 2 austritt ist die Nutgrenze 11. Die Nutgrenze 11 befindet sich etwa auf halber Breite (in Rotationsrichtung) des zweiten Bereichs 9b. Auf der einen Seite des zweiten Bereichs 9b schließt der erste Bereich 9a an. Auf der jeweilig anderen Seite des zweiten Bereichs 9b schließt sich der dritte Bereich 9c an. Im schematischen Aufbau des Aktivteils (oberer Teil von FIG 3) ist gezeigt, dass die Wicklung 3 von der Vergussmasse 5 umgeben ist. In dem ersten Beriech ist die Vergussmasse 5 von dem Grundkörper 1a, 2a zumindest teilweise eingeschlossen. An der Nutgrenze 11 tritt die Wicklung 3 und die Vergussmasse 5 aus dem Grundkörper 1a, 2a, aus.

Der Gauß-Kurvenförmige Verlauf des (Herabgesetzten) Zähigkeit 13 in den einzelnen Bereichen 9a, 9b, 9c entspricht dem Verlauf des (verminderten) Elastizitätsmodul EM. Der andere Verlauf 13' der Zähigkeit 13' zeigt einen weiteren möglichen stufenförmigen Verlauf der Zähigkeit 13'. Der Verlauf der Zähigkeit 13, 13' entspricht dem Verlauf der Konzentration c des Flexibilisators.

Die beiden Teile der FIG 3 sind so angeordnet, dass die einzelnen Bereiche 9a, 9b, 9c auch die einzelnen Bereiche 9a, 9b, 9c in der Vergussmasse 5 des Aktivteils 1, 2 selbst entsprechen. Dies ist mit den nach oben zeigenden Pfeilen symbolisiert.

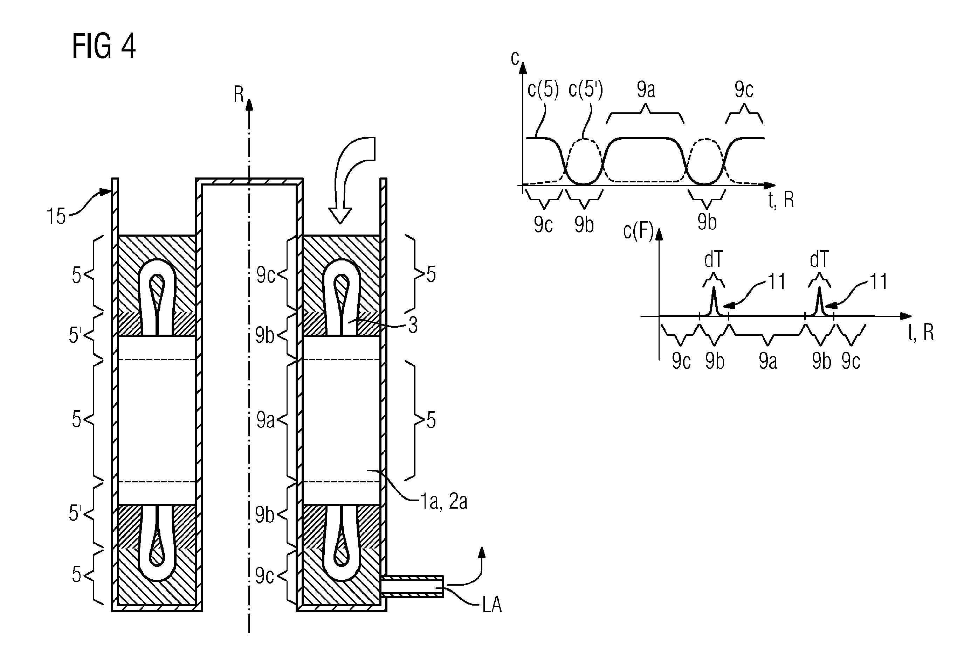

FIG 4 zeigt eine Vorrichtung zur Herstellung eines Aktivteils 1, 2. Insbesondere zeigt die Figur den Vorgang des Vergießens der Wicklungen 3 mit zumindest einer Vergussmasse 5, 5'.

Hierzu wird der Grundkörper 1a, 2a, in einem Gefäß 15 positioniert, wobei das Gefäß 15 entsprechend dem Profil des Grundkörpers 1a, 2a bzw. des Aktivteils 1, 2 geformt ist. Für einen Stator 2 einer dynamoelektrischen Maschine ist das Gefäß 15, wie gezeigt, ein Hohlzylinder. Der Hohlzylinder ist hier im Schnitt gezeigt. Das hohlzylinderförmige Gefäß 15 kann auch auf zumindest einer Seite eine Verengung aufweisen. Der Hohlraum des Gefäßes 15 dient vorteilhaft zur Aufnahme des Grundkörpers 1a, 2a. R bezeichnet hierbei die Rotationsachte des Aktivteils 1, 2.

Zum Vergießen des Aktivteils 1, 2 wird der Grundkörper 1a, 2a, mit der Wicklung 3 in dem Gefäß 15 positioniert. Dann wird von oben (oder unten) Vergussmasse 5 im nicht ausgehärteten Zustand in das Gefäß 15 eingebracht. Die nicht ausgehärtete Vergussmasse 5, 5' durchläuft dann die (durchgehenden) Hohlräume zwischen dem Grundkörper 1a, 2a und der Wicklung 3 sowie die Hohlräume zwischen den einzelnen Leitern der Wicklung 3.

Das Gefäß ist mit einem Luftauslass LA ausgestattet. Der Luftauslass LA kann auch mit einer Vakuumpumpe verbunden sein. Die Vakuumpumpe entfernt dann die Luft aus dem Gefäß, so dass die (noch nicht ausgehärtete) Vergussmasse 5 leichter durch die oben genannten Hohlräume fließt.

Für ein hier beschriebenes Aktivteil wird erst das Vergussmasse 5 eingefüllt, welches für den dritten Bereich 9c vorgesehen ist. Gegebenenfalls wird die Vergussmasse 5 im dritten Bereich 9c zunächst zumindest teilweise ausgehärtet.

Im Anschluss wird die Vergussmasse 5' für den zweiten Bereich 9b eingefüllt. Die Vergussmasse 5' für den zweiten Bereich kann entweder eine unterschiedliche Vergussmasse 5' als die Vergussmasse für den dritten Bereich 9c und/oder für den ersten Bereich 9a sein oder dieselbe Vergussmasse 5 mit einem Flexibilisator F. Auch diese Vergussmasse 5' kann zumindest zum Teil ausgehärtet werden. Dann wird die Vergussmasse 5 für den ersten Bereich 9a eingefüllt. Anschließend kann die Vergussmasse 5, die sich im ersten Bereich 9a befindet, bei Bedarf ausgehärtet werden. Dann wird, nach oben geschildertem Schema, die Vergussmasse 5' für den zweiten Bereich 9b eingefüllt und optional bei Bedarf ausgehärtet. Zum Schluss wird die Vergussmasse 5 für den (anderen) dritten Bereich 9c eingefüllt. Nach dem Einfüllen der Vergussmassen 5, 5' können die Vergussmassen 5, 5' ausgehärtet werden.

Die Vergussmassen 5, 5' werden vorteilhaft durch eine Leitung eingefüllt. Falls zu der Vergussmasse ein Flexibilisator beigefügt wird, kann ein Mischgefäß vor dem Einbringen der Vergussmassen 5, 5' zum Einsatz kommen.

Die Vergussmasse 5 für den ersten Bereich 9a und/oder für den dritten Bereich 9c ist beispielsweise vorteilhaft eine Vergussmasse auf Epoxyd-, Silikon- oder Polyurethan-Basis. Eine Aushärtung kann durch Wärmeeinwirkung oder durch Bestrahlung unterstützte chemische Reaktion erfolgen.

Die Vergussmasse 5' für den zweiten Bereich ist beispielsweise eine Vergussmasse mit einem erhöhten Anteil an einem Flexibilisator F. In Zeitbereichen dT kann anstelle von der Vergussmasse 5 eine andere Vergussmasse 5' in das Gefäß 15 gefüllt werden. In diesem Fall werden in Zeitbereichen dT die Vergussmasse 5' für die zweiten Bereiche 9b in das Gefäß 15 eingebracht.

Vorteilhaft kann auch in einem Zeitbereich dT der Flexibilisator F anstelle der Vergussmasse oder in einer Mischung mit der Vergussmasse 5 in das Gefäß 15 eingefüllt werden. Dabei sind die Zeitbereiche dT so zu wählen, dass der Flexibilisator F an der Nutgrenze 11 die höchste Konzentration c, c(F) aufweist. Dies ist im unteren Diagramm gezeigt.

Die beiden Diagramme auf der rechten Seite zeigen die Verläufe der unterschiedlichen Konzentrationen als Funktion der Zeit t (der Einfüllzeit) bzw. des Füllstandes der Vergussmasse 5, 5' in dem Gefäß an.

In dem oberen Diagramm ist die Konzentration c(5), c(5') der Vergussmassen 5, 5' als Funktion der Zeit bzw. des Füllstandes der Vergussmassen aufgetragen. Als Funktion des Füllstandes/der Füllhöhe der Vergussmasse 5, 5' wird zuerst die Vergussmasse 5 mit einem hohen Elastizitätsmodul EM in das Gefäß eingefüllt. Die Vergussmasse 5 mit dem hohen Elastizitätsmodul EM wird solange eingefüllt, bis der Füllstand erreicht ist, der dem dritten Bereich 9c entspricht. Dann wird eine Vergussmasse 5' oder eine Mischung aus Vergussmassen 5, 5' eingefüllt, wobei der Elastizitätsmodul EM, insbesondere an der Nutgrenze 11, einen verminderten Wert annimmt. Die Vergussmasse 5 oder die Mischung aus Vergussmassen 5, 5' wird bis zu einem Füllstand in das Gefäß 15 eingefüllt, der dem zweiten Bereich 9b entspricht. Dann kann wieder eine Vergussmasse 5, 5' mit erhöhtem Elastizitätsmodul EM eingefüllt werden. Die Vergussmasse 5, 5' mit dem erhöhten Elastizitätsmodul EM wird solange eingefüllt, bis der Füllstand den ersten Bereich 9a überschreitet. Danach wird wieder im zweiten Bereich 9b die Vergussmasse mit dem verminderten Elastizitätsmodul EM eingefüllt bis der Füllstand das Ende des zweiten Bereichs 9b erreicht und dasselbe erfolgt mit der Vergussmasse 5 mit dem erhöhten Elastizitätsmodul EM für den dritten Bereich 9c.

In einem Aspekt betrifft die Erfindung ein Aktivteil 1, 2, insbesondere einen Rotor 1 oder einen Stator 2, einer elektrischen Maschine. Das Aktivteil 1, 2 weist einen Grundkörper 1a, 2a, insbesondere ein Blechpaket 1a, 2a auf. In den Grundkörper 1a, 2a ist (zumindest eine) Wicklung 3 integriert. In zumindest einem Bereich 9b, 9c, insbesondere einem dritten Bereich 9c, sind die Wicklungen 3 nicht von dem Grundkörper 1a, 2a umgeben. Die Wicklungen 3 verlaufen, zumindest bereichsweise, in einer Vergussmasse 5, 5'. Die Vergussmasse 5, 5' steht auch in Verbindung mit dem Grundkörper 1a, 2a. Zur Verbesserung der Haltbarkeit des Aktivteils 1, 2, insbesondere bei Belastungen bei zeitweiser Erwärmung des Aktivteils 1, 2, wird vorgeschlagen, die Zähigkeit bzw. den Elastizitätsmodul EM der Vergussmasse 5, 5' bereichsweise zu verändern. Insbesondere eine Verminderung des Elastizitätsmoduls EM in dem zweiten Bereich 9b, in denen eine thermische Ausdehnung von Elementen des Aktivteils 1, 2 zur mechanischen Belastung des Aktivteils 1, 2 führt, ist eine Vergussmasse 5, 5' mit einem verminderten Elastizitätsmodul EM vorteilhaft. Vorzugsweise ist dazu in einem zweiten Bereich 9b, der zwischen einem ersten Bereich 9a und jeweils einem dritten Bereich 9c, insbesondere im Bereich der Nutgrenze 11 liegt, eine Vergussmasse 5, 5' mit vermindertem Elastizitätsmodul EM positioniert.

Zusammenfassend betrifft die Erfindung ein Aktivteil 1, 2, z.B. einen Rotor 1 oder einen Stator 2 sowie eine elektrische Maschine mit einem solchen Aktivteil 1, 2. Das Aktivteil 1, 2 weist einen Grundkörper 1a, 2a und eine Wicklung 3 auf, wobei die Wicklung 3 von einer Vergussmasse 5, 5' umschlossen ist, wobei die Vergussmasse 5, 5' mindestens drei Bereiche 9a, 9b, 9c aufweist, wobei die Wicklung 3 in einem ersten Bereich 9a in einer Nut 7 durch den Grundkörper 1a, 2a verläuft, wobei die, von der Vergussmasse 5, 5' umschlossene Wicklung 3 zumindest in einem dritten Bereich 9c aus dem Grundkörper 1a, 2a hinausragt. Zur Verbesserung des Aktivteils 1, 2 ist zumindest ein zweiter Bereich 9b zwischen dem ersten Bereich 9a und dem dritten Bereich 9c vorgesehen, wobei die Vergussmasse 5, 5' in dem zweiten Bereich 9b eine andere Zusammensetzung als in dem ersten Bereich 9a bzw. dem dritten Bereich 9c aufweist.

## Patentansprüche

1. Aktivteil (1, 2) einer elektrischen Maschine, insbesondere ein Rotor (1) oder ein Stator (2), aufweisend einen Grundkörper (1a, 2a) und eine Wicklung (3), wobei die Wicklung von einer Vergussmasse (5, 5') umschlossen ist, wobei die Vergussmasse (5, 5') mindestens drei Bereiche (9a, 9b, 9c) aufweist, wobei die Wicklung in einem ersten Bereich (9a) in einer Nut (7) durch den Grundkörper (1a, 2a) verläuft, wobei die, von der Vergussmasse (5, 5') umschlossene Wicklung, zumindest in einem dritten Bereich (9c) aus dem Grundkörper hinausragt, wobei zumindest ein zweiter Bereich (9b) zwischen dem ersten Bereich (9a) und dem dritten Bereich (9c) vorgesehen ist, wobei die Vergussmasse (5, 5') in dem zweiten Bereich (9b) eine andere Zusammensetzung als die Vergussmasse (5, 5') in dem ersten Bereich (9a) bzw. dem dritten Bereich (9c) aufweist.

2. Aktivteil (1, 2) nach Anspruch 1, wobei die Vergussmasse (5, 5') im zweiten Bereich (9b) ein verschiedenes Elastizitätsmodul (EM) als in dem ersten Bereich (9a) beziehungsweise dem dritten Bereich (9c) aufweist.

3. Aktivteil (1, 2) nach Anspruch 1 oder 2, wobei die Vergussmasse (5, 5') im zweiten Bereich (9b) eine verschiedene Zähigkeit als in dem ersten Bereich (9a) beziehungsweise dem dritten Bereich (9c) aufweist.

4. Aktivteil (1, 2) nach einem der Ansprüche 1 oder 2, wobei die Vergussmasse (5, 5') im zweiten Bereich ein vermindertes Elastizitätsmodul (EM) als die Vergussmassen (5, 5') im ersten Bereich (9a) bzw. im dritten Bereich (9c) aufweist.

5. Aktivteil (1, 2) nach einem der vorangehenden Ansprüche, wobei die Vergussmasse (5) im ersten Bereich (9a) und im dritten Bereich (9c) den gleichen Elastizitätsmodul (EM) aufweist.

6. Aktivteil (1, 2) nach einem der vorangehenden Ansprüche, wobei die im zweiten Bereich (9b) befindliche Vergussmasse (5) mit einem Flexibilisator (F) in einer erhöhten Konzentration (c) als in dem ersten Bereich (9a) und in dem zumindest einen dritten Bereich (9c) angereichert ist.

7. Aktivteil (1, 2) nach einem der vorangehenden Ansprüche, wobei die Wicklung (3) auf beiden Seiten des Grundkörpers (1a, 2a) herausragt und wobei auf beiden Seiten des Grundkörpers (1a, 2a) ein zweiter Bereich (9b) an den ersten Bereich (9a) angrenzt.

8. Aktivteil (1, 2) nach einem der vorangehenden Ansprüche, wobei der zweite Bereich (9b) sich um eine Öffnung des Grundkörpers (1a, 2a) erstreckt, wobei die Wicklung (3) aus der Öffnung des Grundkörpers (1a, 2a) herausragt.

9. Aktivteil (1, 2) nach einem der vorangehenden Ansprüche, wobei die Vergussmasse (5, 5') ein Epoxidharz, einen Silikonvergussstoff, ein Polyurethanvergussstoff oder einen Kunststoff aufweist.

10. Aktivteil (1, 2) nach einem der vorangehenden Ansprüche, wobei die Vergussmasse (5, 5') organische und/oder anorganische mikro- und/oder nanoskalige Füllstoffe aufweist.

11. Aktivteil (1, 2) nach einem der vorangehenden Ansprüche, wobei der Grundkörper (1a, 2a) ein Blechpaket (1a, 2a) ist.

12. Verfahren zur Herstellung eines Aktivteils (1, 2) gemäß einem der vorangehenden Ansprüche, wobei die, die Wicklung (3) umschließende Vergussmasse (5, 5') durch die Nut (7) des Grundkörpers (1a, 2a) geleitet wird und wobei bei Durchleiten der Vergussmasse (5, 5') die Zusammensetzung der Vergussmasse (5, 5') in dem ersten, zweiten und dritten Bereichen (9a, 9b, 9c) verändert wird.

13. Stator (1), für eine elektrische Maschine, wobei der Stator ein Aktivteil (1, 2) nach einem der Ansprüche 1 bis 11 ist.

14. Rotor (2), für eine elektrische Maschine, wobei der Rotor ein Aktivteil (1, 2) nach einem der Ansprüche 1 bis 11 ist.

15. Elektrische Maschine, insbesondere eine dynamoelektrische Maschine, aufweisend zumindest ein Aktivteil (1, 2), insbesondere einen Stator (1) oder einen Rotor (2), nach einem der Ansprüche 1 bis 11.
